# EUROPEAN PATENT APPLICATION

(11) **EP 4 641 322 A1**
(43) Date of publication of application: **29.10.2025**
(21) Application number: 24172369.1
(22) Date of filing: 25.04.2024
(51) Int. Cl.: G05B 17/02, G05B 19/418

(54) **SYSTEM AND METHOD FOR CONTROLLING A MACHINE USING A HYBRID SIMULATION MODEL**

(71) Applicant: Siemens Aktiengesellschaft, 80333 München (DE)
(72) Inventor: Hartmann, Dirk, 85617 Aßling (DE); Wolfrum, Philipp, 81539 München (DE); Bozek, Ewa, 91052 Erlangen (DE); Friedrich, Michael, 60385 Frankfurt (DE); Held, Harald, 85461 Bockhorn (DE); Höhlein, Nicolai, 90409 Nürnberg (DE); Loukrezis, Dimitrios, 80809 München (DE); Mas, Peter, 69680 Chassieu (FR); Pfeiffer, Bernd-Markus, 91080 Uttenreuth (DE)
(74) Representative: Siemens Patent Attorneys

(57) **Abstract**

The invention relates to a system for controlling a machine, wherein the machine comprises machine elements and wherein for some of the machine elements are computer-aided modelled using preconfigured model components,
the system comprising:
• a graphical generator configured to generate a computer-aided simulation model for modelling the physical behaviour of the machine using the preconfigured model components for the machine elements, wherein for at least one selected machine element a respective model component is to be configured,
• an analysis unit configured to determine interfaces of the preconfigured model components of the machine elements adjacent to the selected machine element,
• a database configured to provide a plurality of model component templates for computer-aided modelling of at least parts of the machine elements,
• an input unit configured to read in a predetermined specification determining the mapping of the physical behaviour of the selected machine element,
• a selection unit configured to select a model component template from the database for the selected machine element based on the interfaces of the preconfigured model components and based on the specification, and to provide the selected model component template to the graphical generator to insert it into the simulation model,
• at least one sensor configured to receive sensor data of the machine,
• a configuration unit of the graphical generator configured to adapt parameters of the selected model component template using the sensor data such that when running the simulation model it reproduces the sensor data,
and
• an output unit configured to provide the simulation model for controlling the machine.

## Description

The invention relates to a system and computer-implemented method for controlling a machine by means of a computer simulation model of the machine. Furthermore, a computer program product for performing the steps of the method is claimed.

Computer simulations can be used for providing simulated signals for controlling a machine. For example, such computer simulations can be used for virtual commissioning, optimization of machine processes and/or fault identification. To this end, an accurate computer-aided models of the machine is required. Experts can create computer-aided models in graphical modelling tools, i.e., graphical editors to describe simulation models in form of signal flow diagrams and/or material flow diagrams, connecting component models taken from existing libraries. Experts usually know the physical relationships that describe large parts of the model for the machine, such that it is possible to describe the model in equations and connect them in the graphical modelling tool. However, often the physical properties of some parts of the machine may not be well known, such that these parts are usually modelled as black box input/output models, wherein the model parameters are for example learnt using machine learning techniques. The main problem is, however, that typically no measurement data are available from the respective machine part to train the black box model, but only data for the whole machine. This can lead to inaccurate hybrid models and, therefore, to uncertainties in the model-based control solutions.

It is therefore an objective of the present invention to provide a system and method for providing accurate computer-aided models to ensure correct control of the machine.

The objective is solved by the features of the independent claims. The dependent claims contain further developments of the invention.

The invention provides according to the first aspect a system for controlling a machine, wherein the machine comprises machine elements and wherein some of the machine elements are computer-aided modelled using preconfigured model components,
the system comprising:
a. a model generator configured to generate a computer-aided simulation model for modelling the physical behaviour of the machine using the preconfigured model components for the machine elements, wherein for at least one selected machine element a respective model component is to be configured,
b. an analysis unit configured to determine interfaces of the preconfigured model components of the machine elements adjacent to the selected machine element,
c. a database configured to provide a plurality of model component templates for computer-aided modelling of at least parts of the machine elements,
d. an input unit configured to read in a predetermined specification determining the mapping of the physical behaviour of the selected machine element,
e. a selection unit configured to select a model component template from the database for the selected machine element based on the interfaces of the preconfigured model components and based on the specification, and to provide the selected model component template to the model generator to insert it into the simulation model,
f. at least one sensor configured to receive sensor data of the machine,
g. a configuration unit of the model generator configured to adapt parameters of the selected model component template using the sensor data such that when running the simulation model it reproduces the sensor data,
   and
h. an output unit configured to provide the simulation model for controlling the machine.

According to the second aspect the invention provides a computer-implemented method for controlling a machine, wherein the machine comprises machine elements and wherein some of the machine elements are computer-aided modelled using preconfigured model components, the method comprising the following method steps:
a. generating, using the model generator, a computer-aided simulation model for modelling the physical behaviour of the machine using the preconfigured model components for the machine elements, wherein for at least one selected machine element a respective model component is to be configured,
b. determining interfaces of the predefined model components of the machine elements adjacent to the selected machine element,
c. providing in a database a plurality of model component templates for computer-aided modelling of at least parts of machine elements,
d. reading in a predetermined specification determining the mapping of the physical behaviour of the selected machine element,
e. selecting a model component template from the database for the selected machine element based on the interfaces of the predefined model components and based on the specification, and inserting the selected model component template into the simulation model using the model generator,
f. receiving sensor data of the machine,
g. adapting parameters of the selected model component template in the model generator using the sensor data such that when running the simulation model it reproduces the sensor data,
   and
h. providing the simulation model of the machine for controlling the machine.

Unless indicated otherwise in the description below, the terms "perform", "calculate", "computer-aided", "compute", "discover", "generate", "configure", "reconstruct" and the like preferably relate to actions and/or processes and/or processing steps that alter and/or produce data and/or that convert data into other data, the data being able to be presented or available as physical variables. In particular, the expression "computer" should be interpreted as broadly as possible in order to cover in particular all electronic devices having data processing properties.

Computers can therefore be for example personal computers, servers, programmable logic controllers (PLCs), handheld computer systems, Pocket PC devices, and other communication devices that can process data in computer-aided fashion, processors, and other electronic devices for data processing.

It is an advantage of the present invention to allow accurate computer-aided modelling of a machine using a hybrid simulation model, i.e., a combination of preconfigured model components and a model component that still need to be configured, using one model generator, preferably a graphical generator or graphical modelling tool, wherein the adaption of the parameters of the model component is performed on the basis of the whole hybrid model in the model generator. Therefore, the model generator has the capability to carry out the adaption of the model component that needs to be configured, for example training an artificial neural network.

According to a preferred embodiment the system may comprise a controller that is configured to run the simulation model and control the machine based on output signals of the simulation model.

The simulation model can then be directly used for a correct control of the machine. This ensures in particular safe control of the machine based on the simulation model.

According to another embodiment of the invention the interfaces may define required input and/or output data of a respective model component and the respective physical quantity of the data.

For example, based on the respective machine element that is modelled by the model component, the interfaces of the model component can correspond to physical interfaces of the respective machine element.

According to another embodiment of the invention a model component template may be
- a single scalar parameter,
- a multivalued parameter vector,
- a single input single output linear dynamic transfer function,
- a multi input multi output linear dynamic transfer function,
   and/or
- a feedforward neural network.

It is therefore possible to determine the degrees of freedom of the respective model component.

According to another embodiment of the invention the selected model component template is a feedforward neural network and wherein the parameters of the feedforward neural network are adapted in a training process executed by the configuration unit.

According to another embodiment of the invention the selection unit is further configured to select a model component template using a pre-trained machine learning model.

For example, the pre-trained machine learning model can be a large-language-model (LLM).

According to another embodiment of the invention the selection using a pre-trained machine learning model is implemented using a knowledge graph.

In addition, a computer program product (non-transitory computer readable storage medium having instructions, which when executed by a processor, perform actions) having program instructions for performing the aforementioned method.

The invention will be explained in more detail by reference to the accompanying figures.
Fig. 1: shows an exemplary embodiment of the system according to the invention; and
Fig. 2: shows an exemplary embodiment of the computer-implemented method according to the invention.

Equivalent parts in the different figures are labeled with the same reference signs. All of the described and/or drawn features as shown by the embodiments can be advantageously combined within the scope of the invention.

Moreover, in particular a (relevant) person skilled in the art, with knowledge of the method claim/method claims, is of course aware of all routine options for realizing products or options for implementation in the conventional art, and so there is no need in particular for independent disclosure in the description. In particular, these customary realization variants known to a person skilled in the art can be realized exclusively by hardware (components) or exclusively by software (components).

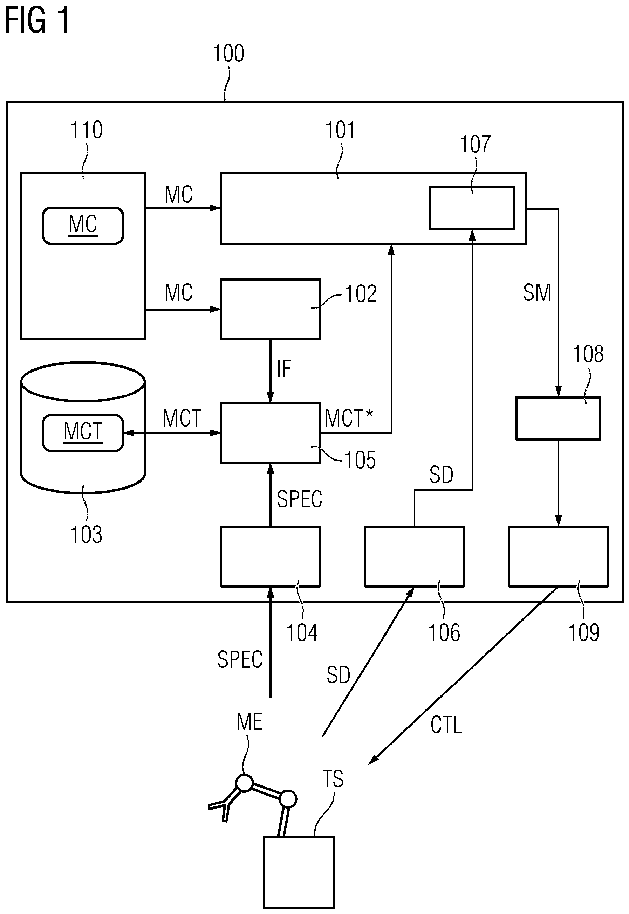

Figure 1 shows a first exemplary embodiment of the invention. It shows a system 100 for controlling a machine TS using a hybrid computer simulation model SM, i.e., a combination of preconfigured/known model components and a model component that still need to be configured.

The machine TS can be for example an industrial robot. It is also possible that the machine is a manufacturing device, a machine tool, a production plant, or a vehicle, e.g., an automated guided vehicle.

The machine TS comprises a plurality of machine elements, e.g., a robot arm or a device/technical component in a production plant. The system 100 is configured to provide a computer simulation model SM that can be used for controlling the machine TS via the controller 109. The simulation model SM comprises a plurality of model components MC that are configured to computer-aided model respective machine elements.

The simulation model SM is for example configured to model a physical behaviour or functionality of the machine TS. To this end, the simulation model SM can provide output signals CTL that can be used to control the machine TS. Therefore, an accurate simulation model is required.

For at least some of the machine elements, preconfigured computer-aided model components MC for computer-aided modelling of the respective physical behaviour or functionality of the respective machine element are available, where "preconfigured" means that parameters of a model component are adapted for the respective machine TS. For example, these preconfigured model components MC are stored in a storage unit 110 and can be retrieved from there.

For at least one selected machine element ME a computer-aided model component is not known, is not available, is not configured yet or still needs to be configured, i.e., for said machine element ME a model component that describes the machine element's physical behaviour or functionality needs to be determined. It is also possible that only for a given physical property, e.g., friction, or functionality, e.g., certain process task, of the selected machine element ME, an appropriate computer-aided model component needs to be configured.

The system 100 comprises a model generator 101, an analysis unit 102, a database 103, an input unit 104, a selection unit 105, at least one (physical) sensor 106, a configuration unit 107 of the model generator 101, an output unit 108, and a controller 109. Preferably, the system 100 comprises at least one storage unit 110, as well as at least one processor.

The model generator 101 is configured to generate a computer-aided simulation model SM for modelling the physical behaviour of the machine TS. The model generator 101 can preferably be a graphical modelling tool or graphical generator for generating a computer simulation model. The model generator 101 is configured to build the simulation model SM out of the preconfigured model components MC from the storage 110. In addition, the model generator 101 allows to set a placeholder block for the model component that needs still to be configured for the selected machine element ME.

The machine elements adjacent to the selected machine element are determined. For example, the selected machine element ME relates to friction within the robot arm. Then, machine elements adjacent to the selected machine element ME can be for example the robot arm itself and a drive to move the robot arm, determining the movement speed of the robot arm.

Then, the respective model components MC for these adjacent machine elements are determined and retrieved from the storage 110. The analysis unit 102 is configured to determine interfaces IF of these preconfigured model components MC of the machine elements adjacent to the selected machine element ME. The interfaces IF define for example required input and/or output data of a respective model component and the respective physical quantity of the input/output data. In the example above, an interface IF of a model component MC can for example process speed data from the robot arm movement. Output data of an interface IF of one preconfigured model component therefore defines required input of a coupled/adjacent model component and vice versa.

The database 103 is configured to provide a plurality of model component templates MCT for computer-aided modelling of at least parts of the machine elements. The database 103 can be for example realized in the cloud. The parameters of the model component templates MCT are typically not configured yet, i.e., they need to be adapted for a specific machine. A model component template MCT can be for example a single scalar parameter, a multivalued parameter vector, a single input single output linear dynamic transfer function, a multi input multi output linear dynamic transfer function, and/or a feedforward neural network, wherein the parameters of such a model component template MCT are usually not known/not configured yet.

The input unit is 104 configured to read in a predetermined specification SPEC determining the mapping of the physical behaviour of the selected machine element ME. For example, if the machine element ME relates to friction in the robot arm, the specification can specify a friction characteristic. In general, the specification SPEC can specify that the model component template to be selected shall be a single scalar parameter, a multivalued parameter vector, a SISO or MIMO linear dynamic transfer function, or a feedforward neural network. In other words, the specification SPEC can comprise information about the desired model component to be selected.

The selection unit 105 is configured to select a model component template MCT* from the database 103 for the selected machine element ME based on the given interfaces IF of the preconfigured model components MC and based on the specification SPEC. For example, a friction characteristic can be selected depending on the information of the interfaces and the specification. Therefore, it is guaranteed that the selected model component template MCT* fits to the adjacent model components in terms of inputs and/or outputs. The specification SPEC helps to select the appropriate model component template with appropriate degrees of freedom.

The selection unit 105 is further configured to provide the selected model component template MCT* to the model generator 101 to insert it as a model component for said machine element ME into the simulation model SM.

The model generator 101 is then for example configured to replace the placeholder block in the simulation model SM with the selected model component template MCT*. The inputs and outputs, i.e., the interfaces, of the selected model component template MCT* preferably match to the adjacent model components MC thanks to the selection process as described above such that the selected model component template MCT* can be directly integrated into the simulation model SM.

The at least one sensor 106 is configured to receive sensor data SD of the machine. The sensor can be any kind of sensor. In particular, the sensor data can comprise information about the whole machine TS. For example, the at least one sensor 106 provides speed measurements of the robot and/or the robot arm for particular tasks.

The configuration unit 107 of the model generator 101 is configured to adapt parameters of the selected model component template MCT* using the sensor data SD such that, when running the simulation model SM, the simulation reproduces the sensor data SD within a given uncertainty interval. This first requires obtaining sufficient measurement data of the machine TS. The data SD can but need not include measurements of the inputs and outputs of the machine TS. Specifically, it is not necessary that direct input/output data of the selected machine element ME are available.

For example, in case that the model component template MCT* is a neural network, a learning algorithm can be executed which calculates the parameters of the model component template MCT* such that the signals generated by the simulation model SM match the provided measurements with a minimal sum of squared errors.

The output unit 108 is configured to provide the simulation model SM for controlling the machine.

The control unit 109 is configured to control the machine TS depending on the output signals CTL from the simulation model SM.

The model generator 101 is therefore preferably configured to enable joint modelling as well as parametrizing and learning of the hybrid simulation model SM, i.e., a simulation model comprising preconfigured and placeholder model components as described above. The structure of the hybrid model that describes the machine TS can be modelled using a standard modelling language or in a graphical modelling tool. The hybrid model structure can then be described with the modelling language and/or the graphical modelling tool and can comprise defining placeholder blocks for the unknown model parts for the selected machine elements ME in the right locations of the hybrid model in accordance with the physical machine structure. This further includes the definition of the interfaces IF between the known and unknown model components. Since the interfaces IF for the known blocks/model components are generally well defined, the interfaces of the unknown/to be configured model components can be inferred automatically, further reducing the modelling effort. Each placeholder block of an unknown part can then be further specified with the model generator 101 to best capture the typical physical behaviour of the respective machine element ME. Such specification can help to determine the best fitting model component template such as a single scalar parameter, a multivalued parameter vector, a SISO or MIMO linear dynamic transfer function or a feedforward neural network. The parameters of these blocks may be mostly or completely unknown.

Since the inputs and outputs for the respective model component template have been automatically defined and the context is available through the adjacent known model components, the type of the model component template can also be selected by the selection unit 105 by means of a pre-trained machine learning model/AI technologies, e.g. using a knowledge graph. Preferably, the machine learning model can be retrieved from a corresponding ML model database. For example, if a first model component is a friction model and second model component is a chemical reaction model, knowing the expected contribution of each, optimal templates for the individual parts can be deduced by means of Al and ML, ideally using readily available, pre-trained ML models from a corresponding ML model database.

The configured hybrid simulation model SM and/or the configured model component template MCT* can then be sent to the database 103 for further modelling of similar machines.

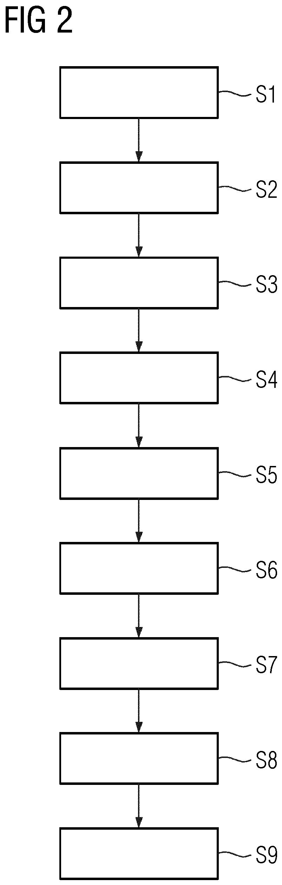

Figure 2 shows an exemplary embodiment of the computer-implemented method for controlling a machine comprising machine elements. For at least some of the machine elements preconfigured model components for computer-aided modelling of the respective machine element are available, i.e., for some of the machine elements there are computer-aided models using preconfigured model components. For at least one selected machine element, a respective model component for computer-aided modelling is either not known and/or still needs to be configured.

The method comprising the following method steps:
In the first step S1 a computer-aided simulation model for modelling the physical behaviour of the machine is generated using the preconfigured model components for the machine elements. The generation of the simulation model can be for example performed in a graphical model generator. For unknown model components a placeholder block can be for example inserted into the simulation model.

In the next step S2, for the machine elements adjacent to the selected machine element, the interfaces of the preconfigured model components of these adjacent machine elements are determined. The interfaces define required input and/or output data of a respective model component and the respective physical quantity of the input/output data.

In the next step S3 a plurality of model component templates for computer-aided modelling of at least parts of machine elements are provided in a database. The model component templates comprise:
- single scalar parameters,
- multivalued parameter vectors,
- single input single output (SISO) linear dynamic transfer functions,
- multi input multi output (MIMO) linear dynamic transfer functions,
   and/or
- feedforward neural networks in different configurations.

In the next step S4 a predetermined specification for mapping the physical behaviour of the selected machine element is read in. For example, the specification can be read in from a storage unit associated with the machine. It is also possible that a user provides the specification as input. The specification can for example define the degrees of freedom of the model component template, e.g., scalar function, and/or the type of model component template, e.g., neural network.

In the next step S5 a model component template is selected from the database for the selected machine element based on the interfaces of the preconfigured model components and based on the specification. In particular, the interfaces can define the required input and/or output data of the respective model component template. Afterwards, the selected model component template is integrated into the simulation model and the simulation model is provided.

In the next step S6 sensor data of the machine are received from a sensor. Different kind of sensors are possible.

In the next step S7, the parameters of the selected model component template are adapted, preferably in the graphical generator, using the sensor data such that when running the simulation model, it reproduces the measured sensor data.

To this end, the parameters of the model component are set and the in such way configured simulation model can be sent to a simulator that is configured to run the simulation model. The simulation model is run on the simulator resulting in simulation data that can then be compared to the sensor data. Depending on the comparison result, the parameters of the model component template is further adapted until the simulation model reproduces the sensor data within a given uncertainty range.

In the next step S8 the fully configured simulation model of the machine is provided for controlling the machine.

In the next step S9, the configured simulation model can be for example executed by the simulator to provide output signals for a controller. The controller can the control the machine based on the output signals from the simulation.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. System (100) for controlling a machine (TS), wherein the machine (TS) comprises machine elements and wherein some of the machine elements are computer-aided modelled using preconfigured model components (MC),
the system comprising:
a. a graphical generator (101) configured to generate a computer-aided simulation model for modelling the physical behaviour of the machine using the preconfigured model components (MC) for the machine elements, wherein for at least one selected machine element (ME) a respective model component is to be configured,
b. an analysis unit (102) configured to determine interfaces (IF) of the preconfigured model components (MC) of the machine elements adjacent to the selected machine element (ME),
c. a database (103) configured to provide a plurality of model component templates (MCT) for computer-aided modelling of at least parts of the machine elements,
d. an input unit (104) configured to read in a predetermined specification (SPEC) determining the mapping of the physical behaviour of the selected machine element (ME),
e. a selection unit (105) configured to select a model component template (MCT) from the database (103) for the selected machine element (ME) based on the interfaces (IF) of the preconfigured model components and based on the specification (SPEC), and to provide the selected model component template (MCT*) to the graphical generator (101) to insert it into the simulation model,
f. at least one sensor (106) configured to receive sensor data (SD) of the machine,
g. a configuration unit (107) of the graphical generator (101) configured to adapt parameters of the selected model component template (MCT*) using the sensor data SD) such that when running the simulation model it reproduces the sensor data,
h. and
i. an output unit (108) configured to provide the simulation model (SM) for controlling the machine.

2. System according to claim 1, further comprising a controller (109) that is configured to run the simulation model and control the machine based on output signals (CTL) of the simulation model.

3. System according to one of the preceding claims, wherein the interfaces define required input and/or output data of a respective model component and the respective physical quantity of the data.

4. System according to one of the preceding claims, wherein a model component template is:
• a single scalar parameter,
• a multivalued parameter vector,
• a single input single output linear dynamic transfer function,
• a multi input multi output linear dynamic transfer function,
and/or
• a feedforward neural network.

5. System according to one of the preceding claims, wherein the selected model component template is a feedforward neural network and wherein the parameters of the feedforward neural network are adapted in a training process executed by the configuration unit.

6. System according to one of the preceding claims, wherein the selection unit (105) is further configured to select a model component template using a pre-trained machine learning model.

7. System according to claim 6, wherein the selection is implemented using a knowledge graph.

8. Computer-implemented method for controlling a machine, wherein the machine comprises machine elements and wherein some of the machine elements are computer-aided modelled using preconfigured model components,
the method comprising the following method steps:
a. generating (S1), using the graphical generator, a computer-aided simulation model for modelling the physical behaviour of the machine using the preconfigured model components for the machine elements, wherein for at least one selected machine element a respective model component is to be configured,
b. determining (S2) interfaces of the preconfigured model components of the machine elements adjacent to the selected machine element,
c. providing (S3) in a database a plurality of model component templates for computer-aided modelling of at least parts of machine elements,
d. reading in (S4) a predetermined specification determining the mapping of the physical behaviour of the selected machine element,
e. selecting (S5) a model component template from the database for the selected machine element based on the interfaces of the preconfigured model components and based on the specification, and inserting the selected model component template into the simulation model using the graphical generator,
f. receiving (S6) sensor data of the machine,
g. adapting (S7) parameters of the selected model component template in the graphical generator using the sensor data such that when running the simulation model it reproduces the sensor data,
and
h. providing (S8) the simulation model of the machine for controlling the machine.

9. Computer program product directly loadable into the internal memory of a digital computer, comprising software code portions for performing the method steps of claim 8 when said computer program product is run on the computer.
